# EUROPEAN PATENT APPLICATION

(11) **EP 3 174 213 A1**
(43) Date of publication of application: **31.05.2017**
(21) Application number: 15306870.5
(22) Date of filing: 25.11.2015
(51) Int. Cl.: H04B 5/00, H04W 52/02, G06K 7/00, H04W 4/00

(54) **APPLICATION ACTIVATION IN A SMART DEVICE**

(71) Applicant: GEMALTO SA, 92190 Meudon (FR)
(72) Inventor: SVOBODA, Petr, 92190 Meudon (FR)
(74) Representative: Cassagne, Philippe M.J.

(57) **Abstract**

The invention relates to a smart device 100 and to a corresponding method for managing the smart device 100. The smart device 100 comprises a processing unit 131, at least one physical user interface 132, 133, a battery 134, a contactless frontend 110, and a secure environment 120. The secure environment is connected on one side to the processing unit 131 and on the other side to the contactless frontend 110, said secure environment 120 comprising at least two contactless applications 121-123 accessible through the contactless frontend 110 if the contactless application is activated. Each contactless application can be activated or deactivated by the processing unit 131. The processing unit 131 switches off the smart device 100 when the battery 134 level is near empty. Before switching off, the processing unit 131 activates at least one of the contactless applications inside the secure environment 120.

## Description

### Field of the Invention:

The invention relates to application in a smart device and more particularly for an NFC smart device capable to communicate in battery-off mode.

### Background of the Invention:

Near Field Communication (NFC) is defined by ISO14443 for making contactless transaction with smart card. Today, such communication is still is use with smart cards but is also use with other smart devices like smart phones or tablet. Originally, the smart device includes a SIM card which handles the NFC service(s) but today the SIM card can be replaced either by a SD card, or a Secure Element, or a trusted environment emulating a secure element inside the smart device.

NFC is used for several purposes amongst payment, transport and access control. According to a wish to have all services in one device, GlobalPlatform standard has been defined for multi-applicative purpose. In particular, this document makes reference to GlobalPlatform Card Technology, Contactless Services, Card specification v2.2 - Amendment C, Version 1.1.1, publicly released on July 2014 under document reference GPC_SPE_025. Even if this document address a card, the standard is made for any kind of card including a secure environment, including a Secure Element integrated into a smart device.

Global platform defines that a card inside a mobile handset is connected to two different interfaces. A first interface is connected to the processing part of the handset and a second interface is connected to a contactless frontend (CLF). The processing part of the handset is used as a User Interface enabling a user to interact with a contactless application, in particular for activation or selection of an application, validation of transaction or simply for consulting the data related to one application. The contactless frontend comprises an antenna and a modem for communicating with a contactless reader.

Whatever the interface used for accessing application inside the card, the access is made to the Contactless Registry Services (CRS) application defined into Global Platform. The CRS application manages all the contactless applications. To be accessed though the CLF, an application is previously activated by the user through the mobile. When an application is activated, the CRS application detects if a conflict exists with another contactless application already activated. If a conflict is detected the other application must be deactivated before activation of the new activated application. Conflicts are raised between contactless applications for several reasons and in particular when the number of entry points is limited. So the probability of conflict increases with the number of applications stored in a same card. In conclusion, when the card includes a lot of contactless application, only few of the contactless applications are activated at the same time.

As well known in the art, smart devices comprise some battery that could be discharged in case of a long use. Considering that some contactless applications must be use even if the battery is empty, it exist a battery-off mode for contactless applications. In battery-off mode, the card and the contactless frontend are powered by the reader through the magnetic field used for communicating. So it is possible to power these elements and only these elements so it is no more possible to activate or deactivate a contactless application because such an access should be performed through the smart device which is off.

Then a problem occurs when the battery is empty while a contactless application required by the user is deactivated. This is not critical if the contactless application corresponds to a payment application because a socket can be near the POS for plugging the smart device to the power network. But if the deactivated contactless application is an access application for opening the car door, the door of the house, or for using transportation network to go back home it could be more critical not to have access to such a contactless application.

### Summary of the Invention:

The application solves the indicated problem by simply configure the activation of the contactless application when the smart device switches off. More particularly, the invention is a smart device comprising a processing unit, at least one physical user interface, a battery, a contactless frontend, and a secure environment. The processing unit includes a microprocessor and some memories for storing and running programs. The at least one physical user interface is connected to the processing unit. The battery powers the processing unit and the physical user interface. The contactless frontend is capable to communicate with an external reader. The secure environment is connected on one side to the processing unit and on the other side to the contactless frontend, said secure environment comprising at least two contactless applications accessible through the contactless frontend if the contactless application is activated, each contactless application can be activated or deactivated by the processing unit. The processing unit comprises a power management program for switching off the device when the battery level is near empty. The power management program activates at least one of the contactless applications inside the secure environment.

In the preferred embodiment, the contactless frontend is compliant with ISO14443. The secure environment is a microcontroller chip having a first interface connected to the contactless frontend and a second interface connected to the processing unit. The first interface is compliant with ETSI TS 102 613 and the first interface power supply the trusted environment when the device is switched off. The battery level is near empty when the battery level falls down under a predetermined level.

According to another aspect, the invention is also a method for managing a smart device comprising a processing unit, at least one physical user interface, a battery, a contactless frontend, and a secure environment. The processing unit includes a microprocessor and some memories for storing and running programs. The at least one physical user interface is connected to the processing unit. The battery powers the processing unit and the physical user interface. The contactless frontend is capable to communicate with an external reader. The secure environment is connected on one side to the processing unit and on the other side to the contactless frontend, said secure environment comprising at least two contactless applications accessible through the contactless frontend if the contactless application is activated, each contactless application can be activated or deactivated by the processing unit. The processing unit switches off the device when the battery level is near empty. Before switching off, the processing unit activates at least one of the contactless applications inside the secure environment.

In an alternative embodiment, and if a conflict occurs during the activation of the at least one of the contactless application then the processing unit deactivates the at least one conflicting contactless application.

### Brief Description of the Drawings:

The invention will be better understood after the reading of the following Description of the Preferred Embodiments that makes references to the annexed drawings in which:
Figure 1 shows a functional diagram of a smart device according to GlobalPlatform,
Figure 2 shows a functional diagram of a smart device according to the invention,
Figure 3 shows a flowchart of a program for switching of the device according the invention

### Description of the Preferred Embodiments:

The man of the art will understand in the following description that the example of the handset is only one example of a smart device amongst several other kind of device like a tablet or any computer including a secure element. The man of the art will also understand that the secure element can be removable and carried by any card form factor. Another alternative is to replace the secure element by a trusted environment inside the processing unit of the smart device, the trusted environment being a software emulation of a secure element inside the processing unit.

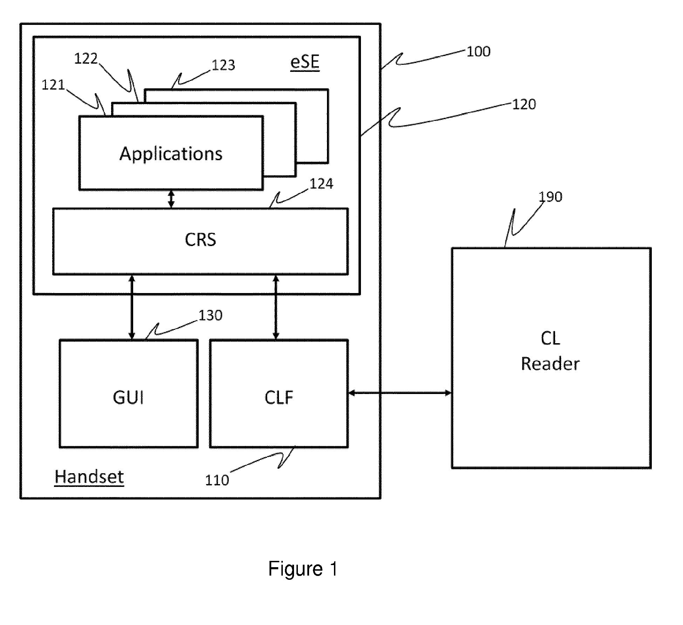

The figure 1 shows a functional diagram of a handset 100 communicating with a contactless reader 190, as defined by GlobalPlatform. In a functional point of view for contactless application, the handset 100 comprises a contactless frontend 110, a secure element 120 and user interface means 130. GlobalPlatform defines a software environment that enables to have several applications sharing the same resources but without interaction or at least a highly controlled interaction. The secure element 120 comprises several contactless applications 121 to 123 stored in several memory areas each dedicated to only one contactless application 121 to 123 and processed with a same processor. To avoid any interaction with the applications 121 to 123, all accesses to the contactless applications 121 to 123 are made under the control of a management application 124 that manages the Contactless Registry Services, i.e. all the status of and all the access to the contactless applications 121 to 123. The management application 124 is part of the operating system of the secure element.

As indicated the secure element 120 could be of several types. An independent microcontroller is a preferred solution because that enables a more easy and efficient control of the access on the physical interface(s) in such a way to be tamper proof. The secure element 120 is linked preferentially through a first interface to the contactless front end 120 and through a second interface to the user interface means 130. A single interface could be used but, in that case, it is mandatory that the interface support two identified logical channels. Depending of the microcontroller type, several interfaces could be used. If the secure element is removable microcontroller chip embedded in a card form factor, the fist interface can be for example SWP (Single Wire Protocol) according to ETSI TS 102 613 standard that is supported by several card format and the second interface can be SD card interface or ISO7816 interface. If the secure element is a microcontroller chip sold inside the smart device, the previous interface can be used but it is also possible to use other communication bus like SPI, I2C, USB or any other for the first and second interfaces.

The user interface means 130 are constituted by the processing means and the user interface means of the handset 100. The user interface means 130 enables the user to select a contactless application 121 to 123 before using it or after a first exchange with the reader 190. The user interface means 130 also enables to enter a PIN code if a contactless application 121 to 123 requests it.

The contactless front end 110 comprises a modem and an antenna compatible with ISO 14443 for communicating with the contactless reader 190. The contactless front end is also capable to extract energy from the electromagnetic field produced by the contactless reader supplying itself and also the secure element 120 when the handset is switched off. The contactless front end 110 makes also a communication standard translation between ISO 14443 and the first interface for enabling the contactless reader 190 to communicate with the secure element 120.

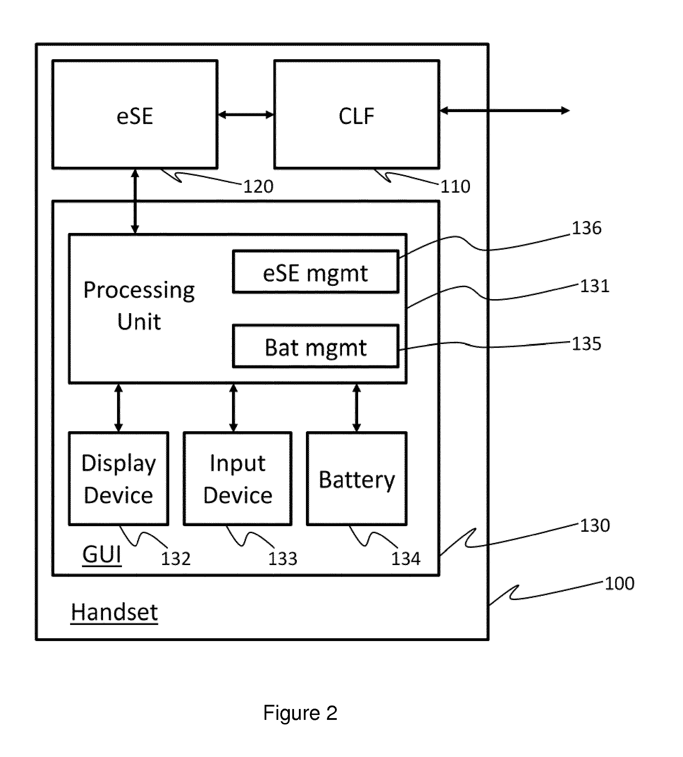

On figure 2, different functions of handset 100 are detailed for implementing the invention. In particular, the user interface means 130 comprises a processing unit 131, a display device 132, an input device 133 and a battery 134. For simplifying the specification, other elements of the handset which are not concern by the invention are not detailed. The processing unit 131 mainly comprises at least one processor, a non volatile memory for storing programs and permanent data and a volatile memory for running the programs. The processing unit 131 controls information that is sent to the display device 132 for showing them to a user. The input device 133 is also connected to the processing unit 131 for receiving information from the user. In a preferred embodiment, the display device 132 and the input device 133 are a single component which is a touch screen device that enables to display message and image like any kind of display and providing to the processing unit 131 only the position on the screen of touch detection. In this preferred embodiment, the processing unit 131 makes an interpretation of any touch information depending of what is displayed at the same time.

The battery 134 is used for powering all the components of the handset when switched on. In addition, the battery 134 is capable to communicate with the processing unit 131 either on demand or on interruption. The communication of the battery 134 is mainly done for reporting the level of remaining energy. In that way, the processing unit 131 comprise a battery management program 135 that manage request of energy level and also for managing the interruption coming from the battery and indicating some critical level of energy. A critical level of energy corresponds to a particular level for which the user request to be alerted of for which the handset has an action to perform. The action to perform could be either switching the handset in a low consumption mode or switching off the handset when the battery is near empty.

The processing unit 131 also manages the secure element 120 by using a secure element management program 136. The secure element management program 136 can be launched by the user for interacting with the secure element 120. Such a secure element management program 136 is used for enabling the interaction between the contactless applications 121-123 of the secure element 120 and a user or another program of the handset. In particular the secure element management program 136 can build commands for reading and for modifying the status of the different contactless application 121-123 as indicated by GlobalPlatform.

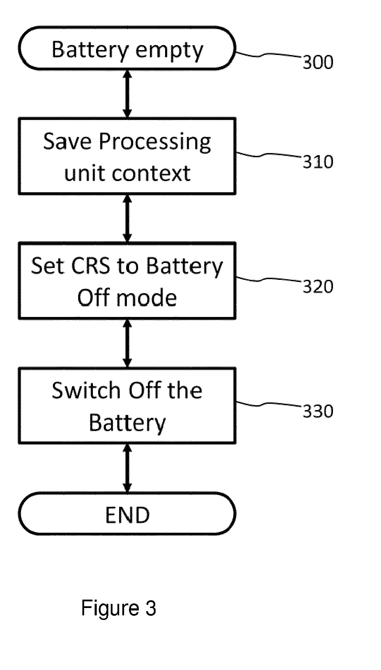

In the invention, the battery management program 135 will interact with the secure element management program 136 when the battery is near empty. Such modified switch-off method is disclosed in relation with figure 3. On a detection of a battery level near empty, i.e. when the energy level fall below a threshold considered only sufficient for performing few operation before being completely empty, the battery 134 sends an interruption 300 to the processing unit 131 indicating that the battery is near empty. This interruption 300 starts the algorithm of figure 3 for switching off the handset 100. A first step 310 consists in saving the processing unit context. Such a saving of context is well known in the art and corresponds to the clean closing of all opened application, with the saving in non-volatile memory of all data and parameter. During this first step 310, the processing unit may build a summary file indicating the application to re-open at the next switching on of the handset 100, amongst the different application, a report of the activated contactless application 121-123 is requested to the secure element 120 land stored in the non volatile memory of the processing unit 131.

In the invention, a second step 320 is performed for setting the secure element in a status that corresponds to a battery-off mode. The battery-off mode corresponds to the activation of contactless application 121-123 of the secure element 120 that could be needed by the user. Of course, the user has to previously define this mode according to his preference. If the user selects more than one contactless application for battery off mode, he should verify that they are not conflicting together. Several implementations are possible. The preferred implementation consist in deactivating all contactless applications 121-123 and then in activating one or eventually more application(s) which is (were) pre-defined by the user.

Only after the performing of the second step 320, the finishing state 330 is launched. The finishing step 330 consists in simply sending command(s) to one or several electronic switch(s) for switching of handset 100. The algorithm then ends.

As indicted several implementations are possible. An alternative to the second step 320 could be done by activating the preselected contactless application first. If a conflict with another contactless application is raised during this activation then the conflicting contactless application is deactivated. Such alternative enables to keep active another contactless application recently activated and that could be possibly reused in battery-off mode. A drawback is that in case of a conflict occurs, the activation shall be made twice: once before the deactivation and the second time after the deactivation. Such a mechanism could take more time and it should be taken into account for the determination of the threshold corresponding to the energy level corresponding to an empty level.

## Claims

1. A smart device (100) comprising :
- a processing unit (131) including a microprocessor and some memories for storing and running programs,
- at least one physical user interface (132, 133) connected to the processing unit (131),
- a battery (134) for powering the processing unit and the physical user interface,
- a contactless frontend (110) capable to communicate with an external reader (190), and
- a secure environment (120) connected on one side to the processing unit (131) and on the other side to the contactless frontend (110), said secure environment (120) comprising at least two contactless applications (121-123) accessible through the contactless frontend (110) if the contactless application (121-123) is activated, each contactless application can be activated or deactivated by the processing unit (131),
wherein the processing unit (131) comprises a power management program (135) for switching off the smart device (100) when the battery (314) level is near empty, **characterized in that** the power management program (135) activates (320) at least one of the contactless applications (121-123) inside the secure environment (120).

2. The smart device of claim 1, wherein the contactless frontend (110) is compliant with ISO14443.

3. The smart device of claim 1, wherein the secure environment (120) is a microcontroller chip having a first interface connected to the contactless frontend (110) and a second interface connected to the processing unit (131).

4. The smart device of claim 3, wherein the first interface is compliant with ETSI TS 102 613 and wherein the first interface power supplies the trusted environment when the device is switched off.

5. The smart device of claim 1, wherein the battery level is near empty when the battery level falls down under a predetermined level.

6. A method for managing a smart device (100) comprising :
- a processing unit (131) including a microprocessor and some memories for storing and running programs (121-123),
- at least one physical user interface (132, 133) connected to the processing unit (131),
- a battery (134) for powering the processing unit and the physical user interface,
- a contactless frontend (110), and
- a secure environment (120) connected on one side to the processing unit (131) and on the other side to the contactless frontend (110), said secure environment (120) comprising at least two contactless applications (121-123) accessible through the contactless frontend (110) if the contactless application is activated, each contactless application can be activated or deactivated by the processing unit (131),
wherein the processing unit (131) switches off the smart device (100) when the battery (134) level is near empty,
**characterized in that** before switching off, the processing unit activates at least one of the contactless applications inside the secure environment.

7. The method of claim 6, wherein if a conflict occurs during the activation of the at least one of the contactless application then the processing unit deactivates the at least one conflicting contactless application.

8. The method of claim 6, wherein the secure environment is compliant with GlobalPlatform.
